# EUROPEAN PATENT SPECIFICATION

(11) **EP 3 621 351 B1**
(45) Date of publication and mention of the grant of the patent: **22.12.2021**
(21) Application number: 18794545.6
(22) Date of filing: 03.05.2018
(51) Int. Cl.: G01S 5/02, H04W 64/00

(54) **POSITIONING ASSISTANCE DATA CONFIGURATION METHODS, APPARATUSES AND COMPUTER STORAGE MEDIUMS**
POSITIONIERUNGSUNTERSTÜTZUNGSDATENKONFIGURATIONSVERFAHREN, VORRICHTUNGEN UND COMPUTERSPEICHERMEDIUM
MÉTHODES DE CONFIGURATION DES DONNÉES D'ASSISTANCE AU POSITIONNEMENT, APPAREILS ET SUPPORTS DE STOCKAGE INFORMATIQUES

(30) Priority: 05.05.2017 CN 201710313214
(43) Date of publication of application: 11.03.2020
(73) Proprietor: ZTE Corporation, Shenzhen, Guangdong 518057 (CN)
(72) Inventor: WANG, Yuanyuan, Shenzhen Guangdong 518057 (CN); CHEN, Shijun, Shenzhen Guangdong 518057 (CN); CHEN, Dawei, Shenzhen Guangdong 518057 (CN)
(74) Representative: Aipex B.V.
(86) International application number: PCT/CN2018/085437
(87) International publication number: WO 2018/202070

(56) References cited:
- WO-A1-2016/137308
- WO-A1-2017/034182
- CN-A- 101 931 858
- CN-A- 102 026 266
- CN-A- 102 056 222
- CN-A- 102 065 537
- US-A1- 2012 040 696
- US-A1- 2013 122 930
- US-A1- 2014 370 915
- US-A1- 2016 170 005
- US-A1- 2016 205 651
- US-A1- 2016 360 502
- US-A1- 2017 059 689

## Description

### TECHNICAL FIELD

The present invention relates to the field of communications and, in particular, to a positioning assistance data configuration method by an evolved serving mobile location center, E-SMLC, a positioning assistance data configuration method by a user equipment, a computer storage medium for a E-SMLC, a computer storage medium for a UE, an E-SMLC and a UE.

### BACKGROUND

Long term evolution (LTE) is long term evolution of technical standard of a universal mobile telecommunications system (UMTS) organized by the 3rd generation partnership project (3GPP), which is formally established and initiated at 3GPP Toronto conference in December 2004. The LTE system increases spectral efficiency and data transmission rate (under a condition of 64QAM for 20M bandwidth with 2*2 MIMO, a theoretical downlink maximum transmission rate is 201 Mbps, which is about 150 Mbps removing signaling overheads, however, according to actual network and terminal capacity limitation, it is generally considered a downlink peak rate as 100 Mbps and an uplink peak rate as 50 Mbps).

5GNR (a global 5G standard designed by a new orifice, which is based on orthogonal frequency division multiplexing, OFDM) is also very important cellular mobile technology foundation for next generation. A 5GNR network has three main characteristics: an extremely high speed (enhanced mobile broadband, eMBB), an extremely large capacity (massive machine type communications, mMTC), and an extremely low latency (ultra reliable low latency communications, URLLC).

Location service (LCS) is a new value added service provided by a mobile communication network. This service obtains position information of a terminal (latitude and longitude, movement speed, and etc.) through wireless location technologies, and provides the position information to a terminal, a mobile communication network or other external entities to realize various position-related services. At present, the LTE technology includes following location technologies: an observed time difference of arrival, OTDOA, an uplink time difference of arrival, UTDOA, an assisted global positioning system, AGPS, and other methods. The 5GNR system will continue to use these technologies.

The above-mentioned OTDOA and AGPS include two location modes: a user equipment (UE) based location mode (UE-based, network-assisted) and a network based location mode (network-based, UE-assisted). A fundamental difference between the two modes lies in which node (UE or an evolved serving mobile location center, E-SMLC) performs position calculation. According to the UE based location mode, UE performs relevant measurements and calculates a position of the UE in combination with assistance data on the network side; in the network based location mode, UE performs position measurements and reporting processes, and the position of the UE is calculated on the network side, such as the OTDOA location method in existing LTE architecture. According to the network based location mode, capacity of a location terminal is limited by a requirement of reporting RSRP; real-time of location is limited by information interaction. Relatively speaking, the UE based location mode (UE-based) has a larger network capacity and a better real-time performance, which is more suitable for LTE and 5GNR with a large capacity and a low latency, since there is no requirement of reporting a measured value and a reduced information interaction process.

However, there is no record or explanation on how to update and configure assistance data of the OTDOA location mode based on the UE location mode in the related technology.

The document US 2014370915 A1 discloses a method for reporting by a terminal in a wireless communication system. The document WO 2016137308 A1 discloses method by which a terminal performs observed time difference of arrival (OTDOA)-related operations in a wireless communication system. The document US 2012040696 A1 discloses a method of grouping cells of a radio communications network may include defining first and second groups of cells from a plurality of cells that transmit reference signals for positioning measurements. The document US 2016360502 A1 discloses technical for supporting positioning for terminals in a wireless network.

### SUMMARY

The invention is defined in the claims. According to respective independent claims 1, 3, 8, 9, 10 and 11, a positioning assistance data configuration method by an evolved serving mobile location center, E-SMLC, a positioning assistance data configuration method by a user equipment, a computer storage medium for a E-SMLC, a computer storage medium for a UE, an E-SMLC and a UE are defined, which can update and configure assistance data.

The present invention have at least following beneficial effects: assistance data of an OTDOA positioning mode can be updated and configured, information interaction and network side intervention can be reduced, and it has a lower time latency and real-time performance; selection of a reference cell and sorting of a neighbor list are performed on the UE side, which is more convenient to combine various priori information, thus a better location effect is obtained.

### BRIEF DESCRIPTION OF DRAWINGS

FIG. 1 is a schematic structural diagram of a positioning assistance data configuration system.
FIG. 2 is a flow chart of a positioning assistance data configuration method according to an embodiment of the present invention;
FIG. 3 is a flow chart of a positioning assistance data configuration method according to an embodiment of the present invention;
FIG. 4 is a flow chart of positioning assistance data configuration of a terminal in a non-claimed embodiment 1.
FIG. 5 is a process diagram of positioning assistance data configuration of a terminal in a non-claimed embodiment 1.
FIG. 6 is a flow chart of an update of positioning assistance data of a terminal in a non-claimed embodiment 2.
FIG. 7 is a process diagram of an update of positioning assistance data of a terminal in a non-claimed embodiment 2.

### DETAILED DESCRIPTION

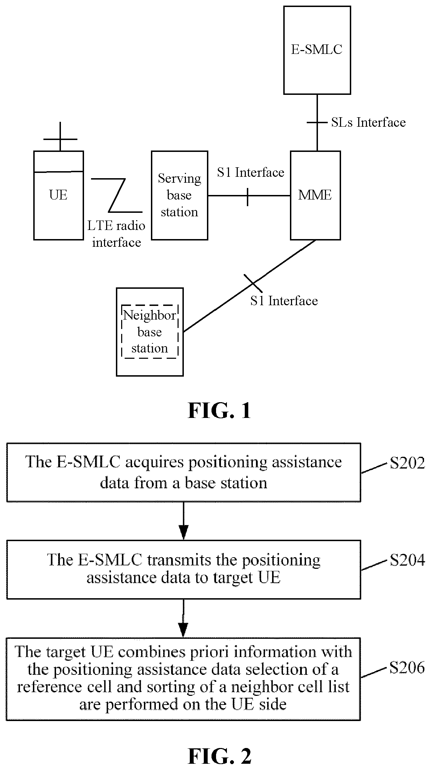

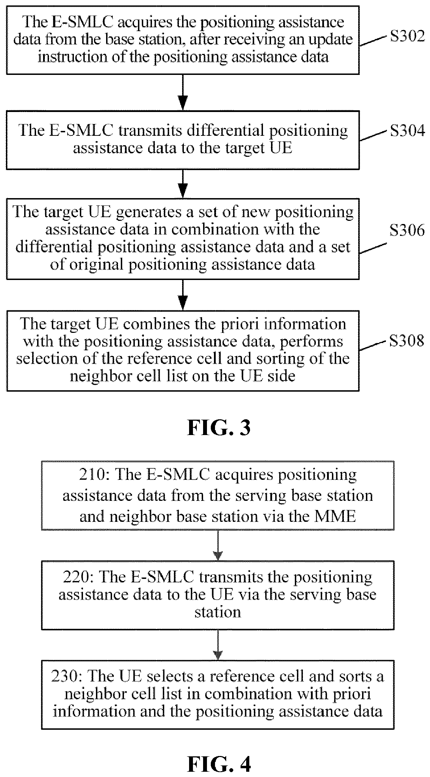

In the following description, the embodiments described with respect to Figures 2 and 3 are covered by the claims. All other embodiments and aspects are provided for illustrative purposes.

In order to solve following problems in related technologies: the related technologies have no record and explanation on how to update and configure assistance data of an OTDOA location mode based on the UE location mode; the present invention will be described in further detail below with reference to the drawings and embodiments. It should be understood that the specific embodiments described herein are only for a purpose of explaining the present invention and are not intended to limit the present invention.

The positioning assistance data configuration system may include following devices as shown in FIG. 1: an E-SMLC, a mobile management entity (MME), a base station (eNode B), a TP, and a terminal (target UE), main functions of each device are generally described as follows:
(1) E-SMLC:
   1) As a transmission device: transmitting a positioning assistance data request and an update request of positioning assistance data to the base station; and transmitting the positioning assistance data and updated positioning assistance data to the target UE.
   2) As a reception device: receiving the positioning assistance data; and receiving the positioning assistance data request.
   3) As a processing device: matching the updated positioning assistance data with original positioning assistance data to determine positioning assistance data needed to be transmitted.
(2) MME:
   1) As a forwarding device: transmitting updated information of the positioning assistance data; forwarding positioning request information to a serving base station and a neighbor base station; forwarding the positioning assistance data to the E-SMLC; and forwarding the positioning assistance data to the serving base station.
(3) eNode B:
   1) As a transmission device: transmitting collected positioning assistance data or the updated positioning assistance data to the E-SMLC; forwarding the positioning assistance data forwarded from the E-SMLC to the target UE; and transmitting configuration information to different cells and TPs.
   2) As a reception device: receiving the positioning assistance data or an update request of the positioning assistance data transmitted by the E-SMLC; receiving the positioning assistance data transmitted by the E-SMLC; and receiving the configuration information from different TPs and cells.
(4) TP:
   1) As a transmission device: transmitting the configuration information to the eNode B.
   2) As a reception device: receiving the configuration information from the eNode B.
(5) Terminal (the target UE):
   1) As a transmission device: transmitting the positioning assistance data or an update request of the positioning assistance data.
   2) As a reception device: receiving the positioning assistance data or the updated positioning assistance data transmitted by the E-SMLC.
   3) As a processing device: constructing and updating the positioning assistance data, selecting a reference cell, sorting a neighbor cell list, and etc..

Where, the TP includes a cell and/or a TP, and the TP includes, but is not limited to, a radio frequency head of the eNode B, a TP (a PRS only TP) that only transmits PRS signals, a PRS-based TBS, and etc..

The positioning assistance data includes following information of a cell to which the UE belongs: a physical identification of the cell, geographic coordinate information of the cell, cell coverage information, PRS configuration information of the cell, a measurement value of a position measurement unit, and a cell synchronization attribute; the measurement value of the position measurement unit includes time information or a relative time difference of the cell.

A positioning assistance data configuration method according to an embodiment of the present invention based on the above system will be described as follows. The flowchart of the method is shown in FIG. 2, and the method includes steps described below.

S202, the E-SMLC acquires positioning assistance data from a base station.

S204, the E-SMLC transmits the positioning assistance data to target UE.

S206, the target UE combines priori information with the positioning assistance data, selection of a reference cell and sorting of a neighbor cell list are performed on the UE side.

The above process will be detailed described as follows.

In an embodiment, step S202 in which the E-SMLC acquires the positioning assistance data from the base station includes processes described below.
(1) the E-SMLC transmits a positioning assistance data request to the base station through LPPa information, where the LPPa information transmitted by the E-SMLC is transmitted to the MME through an SLs interface, and the MME transmits the positioning assistance data request to the base station through an S1 interface;
(2) the E-SMLC receives the positioning assistance data from the base station through the LPPa information, where the base station transmits the LPPa information to the MME through the S1 interface, then the MME transmits the positioning assistance data to the E-SMLC through the SLs interface.

The position assistance data acquired from the base station is position assistance data of a base station and a TP interacted with the base station; the base station includes, but is not limited to, a serving base station and a neighbor base station; and the TP includes, but is not limited to, the radio frequency head of the eNode B, a TP that only transmits PRS signals, a PRS-based TBS, and so on.

The positioning assistance data includes cell information of a cell (or a serving cell) to which the UE belongs and a cell adjacent to the UE.

The cell information includes: a physical identification of the cell, geographic coordinate information of the cell, cell coverage information, PRS configuration information of the cell, a measurement value of a position measurement unit and a cell synchronization attribute; the measurement value of the position measurement unit includes time information or a relative time difference of the cell.

The above physical identification of the cell includes: a physical cell identifier (PCI) of the cell, a cell global identifier (CGI) and TP IDs.

The above-mentioned cell includes a cell or a TP; the TP includes the radio frequency head of the eNode B, a TP that only transmits PRS signals, a PRS-based TBS, and so on.

In an embodiment, the process in which the E-SMLC transmits the positioning assistance data to the target UE includes followings.
(1) the E-SMLC transmits the positioning assistance data to the target UE through LPP information, where the E-SMLC transmits the positioning assistance data to the target UE through SLs, S1 and Uu interfaces to perform positioning data configuration;
(2) the E-SMLC transmits the LPP information to the MME through the SLs interface, the MME transmits to the serving base station through the S1 interface, and the serving base station transmits the positioning assistance data to the target UE through the Uu interface.

The positioning assistance data includes, but is not limited to, cell information of the serving cell of the target UE, all or a part of neighbor cells. All neighbor cells include: a serving base station of the target UE, a neighbor base station and/or all cells under a neighbor location management network element except the serving cell; the part of the neighbor cells includes: the serving base station of the target UE, a neighbor base station and/or a part of the cells under the neighbor location management network element; the above-mentioned part of the neighbor cells may be, but is not limited to, a part of neighbor cells selected by the E-SMLC through position information of the UE or position information of the serving cell, and etc..

In an embodiment, the priori information combined by the target UE includes, but is not limited to, cell information of a serving cell to which the UE belongs, the position information of the UE acquired by other methods or fusion methods, such as GPS, ECID, WiFi or sensors, signal strength of a cell received by the UE, a time of arrival (TOA) value detected by the UE, and/or a TOA error value detected by the UE, and etc..

In an embodiment, the positioning assistance data combined by the target UE mainly includes a geographic coordinate of the serving cell and neighbor cells for subsequent operations.

The above selection of the reference cell includes steps described below. The UE selects one cell from all cells of the positioning assistance data as the reference cell, or the UE accepts the reference cell selection of the E-SMLC.

In implementation, a method of the selection of the reference cell includes steps described below, but it is not limited to the steps. A serving cell is selected, the position of the UE is roughly determined according to the priori information, a cell closest to the UE is selected, a reference cell is selected according to a minimum TOA value, or the reference cell is selected according to a minimum TOA error value.

The priori information is the same as the above-mentioned priori information; the cell includes a cell or a TP; the TP includes the radio frequency head of the eNode B, a TP that only transmits PRS signals, and a PRS-based TBS.

In an embodiment, sorting of the neighbor cell list on the UE side includes sorting cells except the reference cell in the positioning assistance data according to a certain method such as the priority of the cells.

The above-mentioned method for sorting of the neighbor cell list includes steps described below, but is not limited to. The neighbor cell list is sorted by signal strength, the position of the UE is roughly determined according to the priori information, the neighbor cell list is sorted by a minimum position difference between the cell and the UE, and the neighbor cells are sorted according to the TOA value or the TOA error value, and etc..

The priori information includes the cell information of the serving cell to which the UE belongs, the position information of the UE acquired by other methods or fusion methods such as GPS, ECID, WiFi, or sensors, signal strength of neighbor cells received by the UE, a TOA detected by the UE, and/or TOA error detected by the UE, and etc.; the cell includes a cell or a TP; the TP may include the radio frequency head of the eNode B, a TP that only transmits PRS signals and a PRS-based TBS.

A positioning assistance data configuration method is provided according to an embodiment of the present invention, which is a location update process. The flow of the method is shown in FIG. 3, and the method includes steps described below.

S302, after receiving an update instruction of positioning assistance data, the E-SMLC acquires the positioning assistance data from the base station.

S304, the E-SMLC transmits differential positioning assistance data to the target UE.

S306, the target UE generates a set of new positioning assistance data in combination with the differential positioning assistance data and a set of original positioning assistance data.

S308, the target UE combines the priori information with the positioning assistance data, performs selection of a reference cell and sorting of a neighbor cell list on the UE side.

The above process of this embodiment may be associated with the process shown in FIG. 2, and this embodiment is a location update process.

In an embodiment, the process in which the E-SMLC receives the update instruction of the positioning assistance data includes followings.

The E-SMLC receives the update instruction of the positioning assistance data from the base station through LPPa information, where the base station transmits the LPPa information to the MME through an S1 interface; the MME transmits the LPPa information to the E-SMLC through an SLs interface.

In an embodiment, the process in which the E-SMLC acquires the positioning assistance data from the base station includes:
(1) the E-SMLC transmits an update request of the positioning assistance data to the base station through LPPa information, where the E-SMLC transmits the LPPa information to the MME through the SLs interface, and the MME transmits the update request of the positioning assistance data to the base station through the S1 interface.
(2) the E-SMLC receives updated positioning assistance data from the base station through the LPPa information, where the base station transmits the LPPa information to the MME through the S1 interface, and the MME transmits the LPPa information to the E-SMLC through the SLs interface.

The updated positioning assistance data acquired from the base station includes positioning assistance data needed to be updated of the base station and/or positioning assistance data needed to be updated of the TP, the TP is interacted with the base station. The base station includes, but is not limited to, a serving base station and a neighbor base station; the TP includes, but is not limited to, the radio frequency head of the eNode B, a TP that only transmits PRS signals, a PRS-based TBS, and etc..

The positioning assistance data includes cell information of a cell (or a serving cell) to which the UE belongs and a neighbor cell of the UE. Further, the cell information includes following information of the cell to which the UE belongs: a physical identification of the cell, geographic coordinate information of the cell, cell coverage information, PRS configuration information of the cell, a measurement value of a position measurement unit and a cell synchronization attribute; the measurement value of the position measurement unit includes time information or a relative time difference of the cell.

The physical identification of the above cell includes a physical cell ID (PCI) of the cell, a global cell ID (GCI) and TP IDs. The cell includes a cell or a TP; the TP includes the radio frequency head of the eNode B, a TP that only transmits PRS signals, the PRS-based TBS, and etc..

The differential positioning assistance data includes a part or all of following information of a serving cell of the UE and a neighbor cell of the UE: a physical identification of the cell, geographic coordinate information, cell coverage information, PRS configuration information of the cell, a measurement value of a position measurement unit and a cell synchronization attribute; the measurement value of the position measurement unit includes time information or a relative time difference of the cell. The part of following information of the serving cell of the UE and the neighbor cell of the UE includes: when the cell information of the updated positioning assistance data belongs to positioning assistance data before updating, and the information is unchanged, the part of following information only includes a global cell identification (GCI); when the cell information of the updated positioning assistance data belongs to the positioning assistance data before updating, but the information changes, the part of following information includes a global cell identification and changed information.

The part of the serving cell of the UE and the neighbor may also be cell needed to be added and cell information needed to be added, and cell needed to be released and cell information needed to be released relative to a set of original assistance data.

Where all following information of the serving cell of the UE and the neighbor cell of the UE includes: when the cell information of the updated positioning assistance data does not belong to the positioning assistance data before updating, the all following information is transmitted. The all following information includes: a physical identification of the cell, geographic coordinate information, cell coverage information, PRS configuration information of the cell, a measurement value of a position measurement unit and a cell synchronization attribute; the measurement value of the position measurement unit includes time information or a relative time difference of the cell.

In an embodiment, step S304 in which the E-SMLC transmits the differential positioning assistance data to the target UE includes processes described below.

The E-SMLC transmits the positioning assistance data to the target UE through LPP information, where the E-SMLC transmits the positioning assistance data to the target UE through SLs, S1 and Uu interfaces for positioning data configuration, the E-SMLC transmits the LPP information to the MME through the SLs interface, the MME transmits to the serving base station through the S1 interface, and the serving base station transmits the positioning assistance data to the target UE through the Uu interface.

In an embodiment, step S306 in which the target UE generates new positioning assistance data in combination with the differential positioning assistance data and the original positioning assistance data includes (I) or (II):
(I) the target UE matches the GCI of the differential positioning assistance data with the original positioning assistance data;
   the original positioning assistance data and the differential positioning assistance data update the original positioning assistance data according to following options to generate the new positioning assistance data;
   if the unmatched GCI exists in the original positioning assistance data, all information of the cell is deleted; if a differential positioning assistance data cell matched with the cell to which the original positioning assistance data belongs only has GCI information, the cell information keeps unchanged;
   if there is changed information in the differential positioning assistance data cell matched with the cell to which the original positioning assistance data belongs, the changed information is updated to corresponding information of the original positioning assistance data; and
   if the unmatched GCI exists in the differential positioning assistance data, the cell information to which the GCI belongs is added to the original positioning assistance data.
(II) the target UE adds and releases cell and cell information of the original positioning assistance data according to received information of the differential positioning assistance data to generate the new positioning assistance data.

In an embodiment, the priori information combined by the target UE in S308 includes, but is not limited to: the cell information of the serving cell to which the UE belongs, the position information of the UE acquired by other methods or fusion methods, such as GPS, ECID, WiFi or sensors, signal strength of a neighbor cell received by the UE, a TOA value detected by the UE and/or a TOA error value detected by the UE, a position result of the UE before updating, and etc.;
in an embodiment, the positioning assistance data combined by the target UE in S308 mainly includes the geographic coordinate of the serving cell and neighbor cells for subsequent operations.

In an embodiment, the selection of the reference cell in S308 includes a step described below. The UE selects one cell from all cells of the positioning assistance data as the reference cell.

A method of the above-mentioned selection of the reference cell includes steps described below, but it is not limited to the steps. A serving cell and a current reference cell are selected, the position of the UE or a previous located position of the UE is roughly determined according to the priori information, the reference cell is selected according to a minimum position, a minimum TOA value, or a minimum TOA error value, and etc.. The involved priori information includes: the cell information of the serving cell to which the UE belongs, the position information of the UE acquired by other methods or fusion methods, such as GPS, ECID, WiFi, or sensors, or the previous located position, signal strength of a cell received by the UE, a TOA value detected by the UE, and/or a TOA error value detected by the UE, etc.; the cell includes a cell or a TP; the TP includes the radio frequency head of the eNode B, a TP that only transmits the PRS signals and a PRS-based TBS.

In an embodiment, S308 in which the neighbor cell list is sorted includes a step described below. Cells except the reference cell in the positioning assistance data are sorted according to a certain method such as the priority of the cells.

The above method for sorting the neighbor cell list includes steps described below, but it is not limited to following steps. The neighbor cell list is sorted by signal strength, the position of the UE is determined according to the priori information or position information of the UE acquired from the previous location, the neighbor cell list is sorted according to a minimum position difference between the cell and the UE, the neighbor cells are sorted according to a TOA value or a TOA error value, and etc.. The related priori information includes: the cell information of the serving cell to which the UE belongs, the position information of the UE acquired by other methods or fusion methods, such as GPS, ECID, WiFi, or sensors, the previous position, signal strength of a cell received by the UE, a TOA value detected by the UE, and/or a TOA error value detected by the UE, etc.; the cell includes a cell or a TP; the TP includes the frequency radio head of the eNode B, a TP that only transmits PRS signals and a PRS-based TBS.

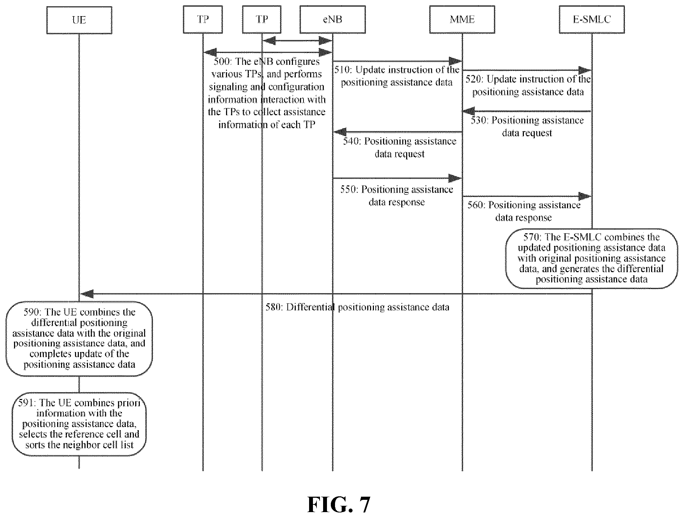

The application of the present embodiment has following beneficial technical effects:
1. measurement in any downlink location is performed on the UE side, compared with the OTDOA and other technologies in the related technologies that perform location and positioning assistance data processing on the network side, there is no need for reporting a measurement result, thus transmission volume is reduced.
2. compared with the OTDOA and other technologies in the related technologies, the embodiments of the present invention are more convenient to select the reference cell and sort the neighbor list for the positioning assistance data on the network side in combination with various priori information, so as to acquire a better location effect. For example, the original selection of the reference cell on the network side can only be selected through measurement information and position information uploaded by the UE, which is limited by reporting granularity and reporting amount. However, the present invention supports the selection of the reference cell on the UE side, which is more convenient to use a sensor, map information and measurement information of a mobile phone, and can better select the reference cell, thus better selection of the reference cell can acquire better position measurement as shown in FIG. 7.
3. compared with the positioning assistance data transmitted on the network side by the OTDOA and other technologies in related technologies, differential transmission is increased, when updated cell positioning assistance is unchanged, only a GCI is transmitted; when the cell information is partially changed, only the changed information is transmitted.

The above process will be described in details below with reference to the drawings and embodiments.

An E-SMLC, an MME, a serving base station, a serving eNB, a neighbor base station, a neighbor eNB, and UE are included in FIG. 1. Where an SLs interface is used to transmit a LCS-AP message between the MME and the E-SMLC, and an S1 interface is used to transmit a S1-AP message between the MME and the eNB.

### Embodiment 1

The E-SMLC, the MME, the serving eNB, the neighbor eNB and UE are involved in this embodiment.

FIG. 4 is a flow chart of positioning assistance data configuration of a terminal according to non-claimed embodiment.

Process of the configuration method includes steps as follows.

210: the E-SMLC acquires positioning assistance data from the serving base station and neighbor base station via the MME.

220: the E-SMLC transmits the positioning assistance data to the UE via the serving base station.

230: the UE selects a reference cell and sorts a neighbor cell list in combination with priori information and the positioning assistance data.

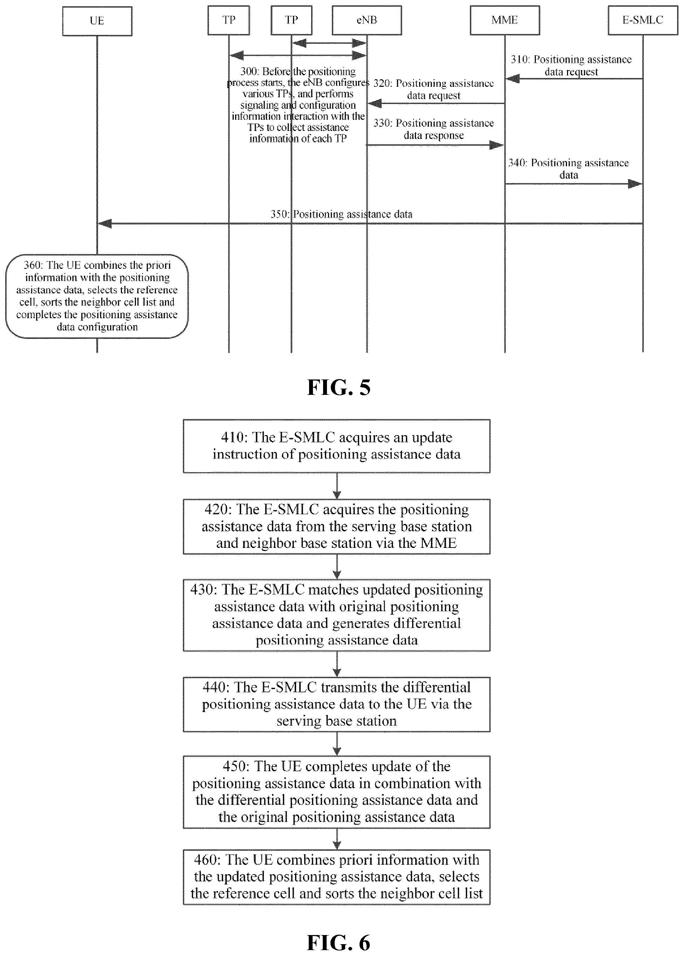

The detailed process procedure of the positioning assistance data configuration of a terminal according to a non-claimed embodiment is shown in FIG. 5. Detailed configuration process includes steps described below.
300: before the positioning process starts, the eNB configures various TPs, and performs signaling and configuration information interaction with the TPs to collect assistance information of each TP;
   the above TPs include the radio frequency head of the eNode B, a TP that only transmits PRS signals and a PRS-based TBS.
310: the E-SMLC transmits a positioning assistance data request to the MME;
   in actual implementation, the E-SMLC forwards a LCS-AP protocol data unit (carrying LPPa PDU) through an SLS message and transmits the positioning assistance data request to the MME.
320: the MME transmits the positioning assistance data request to the serving base station and the neighbor base station;
   in actual implementation, the MME forwards the LPPa PDU through the S1 port and transmits the positioning assistance data request to the serving base station and neighbor base station.
330: the serving base station and the neighbor base station transmit a positioning assistance data response;
   in actual implementation, after receiving the positioning assistance data request, the serving base station and the neighbor base station transmit the positioning assistance data response and the LPPa PDU (including the positioning assistance data) through the S1 port.
340: the MME transmits the positioning assistance data;
   in actual implementation, the MME transmits a LCS-AP protocol data unit (carrying LPPa PDU) to the E-SMLC through an SLS message and transmits the positioning assistance data.
350: the E-SMLC transmits the positioning assistance data to the UE;
360: the UE selects the reference cell and sorts the neighbor cell list according to the priori information and the positioning assistance data to complete the positioning assistance data configuration.

The positioning assistance data includes a part or all of following information of the cell to which the UE belongs: a physical identification of the cell, geographic coordinate information, cell coverage information, PRS configuration information of the cell, a measurement value of a position measurement unit, and a cell synchronization attribute; the measurement value of the position measurement unit includes time information or a relative time difference of the cell.

### Embodiment 2

The E-SMLC, the MME, the serving base station, the serving eNB, the neighbor base station, the neighbor eNB, and the UE are involved in this embodiment.

FIG. 6 is a flow chart of positioning assistance data update of a terminal according to a non-claimed embodiment.

The configuration method includes steps as follows. 410: the E-SMLC acquires an update instruction of positioning assistance data.

420: the E-SMLC acquires the positioning assistance data from the serving base station and neighbor base station via the MME

430: the E-SMLC matches the updated positioning assistance data with original positioning assistance data and generates differential assistance data.

440: the E-SMLC transmits the differential positioning assistance data to the UE via the serving base station.

450: the UE completes the update of the positioning assistance data in combination with the differential positioning assistance data and the original positioning assistance data.

460: the UE combines priori information with the updated positioning assistance data, selects the reference cell and sorts the neighbor cell list.

The differential assistance data is as follows: when the cell information of the updated positioning assistance data belongs to the original positioning assistance data and the information is unchanged, the part of the following information only includes a GCI; when the cell information of the updated positioning assistance data belongs to the original positioning assistance data, but the information changes, the part of the following information includes the GCI and changed information. When the cell information of the updated positioning assistance data does not belong to the original positioning assistance data, the all following information is transmitted. The all following information includes: a physical identification of the cell, geographic coordinate information, cell coverage information, PRS configuration information of the cell, a measurement value of a position measurement unit and a cell synchronization attribute; the measurement value of the position measurement unit includes time information or a relative time difference of the cell.

FIG. 7 is a process of the update of the positioning assistance data of a terminal according to a non-claimed embodiment.

Process procedure of the configuration method includes steps as follows.
500: before the positioning process starts, the eNB configures various TPs, and performs signaling and configuration information interaction with the TPs to collect assistance information of each TP;
   the above TPs include the radio frequency head of the eNode B, a TP that only transmits PRS signals and a PRS-based TBS.
510: the serving base station and the neighbor cell transmit an update instruction of the positioning assistance data to the MME;
   in actual implementation, when the positioning assistance data of the serving base station and the neighbor base stations changes, the base station transmits the update instruction of the positioning assistance data to the MME through the S1 port, and the update instruction carries updated type information and so on;
520: the MME forwards the update instruction of the positioning assistance data to the E-SMLC;
   in actual implementation, the MME forwards the update instruction to the E-SMLC through the SLs port;
530: the E-SMLC transmits a positioning assistance data request to the MME;
   in actual implementation, the E-SMLC transmits an LCS-AP protocol data unit (carrying LPPa PDU) through an SLS message and transmits the positioning assistance data request to the MME.
540: the MME transmits the positioning assistance data request to the serving base station and/or the neighbor base station;
   in actual implementation, the MME forwards the LPPa PDU through the S1 port and transmits the positioning assistance data to the serving base station and/or the neighbor base station.
550: at least one of the serving base station or the neighbor base station transmits a positioning assistance data response;
   after receiving the positioning assistance data request, at least one of the serving base station or neighbor base station transmits the positioning assistance data response through the S1 port, and the message carries the LPPa PDU (including updated positioning assistance data);
560: the MME transmits the positioning assistance data response to the E-SMLC;
   the MME transmits the LCS-AP protocol data unit (carrying LPPa PDU) to the E-SMLC through the SLS message, which includes the updated positioning assistance data;
570: the E-SMLC generates the differential positioning assistance data in combination with the updated positioning assistance data and original positioning assistance data;
580: the E-SMLC transmits the differential positioning assistance data to the UE;
590: the UE combines the differential positioning assistance data with the original positioning assistance data, and completes the update of the positioning assistance data;
591: the UE combines priori information with the positioning assistance data, selects the reference cell and sorts the neighbor cell list.

The differential assistance data may be: when cell information of the updated positioning assistance data belongs to the original positioning assistance data and the information is unchanged, the part of the following information only includes a GCI; when the cell information of the updated location assistance data belongs to the original location assistance data, but the information changes, the part of the following information includes the GCI and changed information. When the cell information of the updated positioning assistance data does not belong to the original positioning assistance data, the all following information is transmitted. The all following information includes: a physical identification of the cell, geographic coordinate information, cell coverage information, PRS configuration information of the cell, a measurement value of a position measurement unit and a cell synchronization attribute; the measurement value of the position measurement unit includes time information or a relative time difference of the cell.

Relative to the original positioning assistance data, the differential assistance data may also be at least one of added cell or added cell information, or at least one of released cell or released cell information.

An OTDOA position assistance data configuration apparatus is provided according to an embodiment of the present invention, the apparatus may be arranged in an E-SMLC and it includes a first acquisition module and a first transmission module.

The first acquisition module is configured to acquire positioning assistance data of an OTDOA from a base station; the first transmission module is coupled with the first acquisition module and the first transmission module is configured to transmit the positioning assistance data to target UE.

The positioning assistance data is positioning assistance data of the base station and a transmission point interacted with the base station.

In actual implementation, the apparatus further includes a first reception module and a generation module. The first reception module is configured to receive updated positioning assistance data transmitted by the base station; the generation module is coupled with the first reception module and the generation module is configured to generate differential positioning assistance data according to the updated positioning assistance data; and the first transmission module is further configured to transmit the differential positioning assistance data to the target UE.

The updated positioning assistance data is positioning assistance data needed to be updated of the base station and/or positioning assistance data needed to be updated of the TP, and the TP is interacted with the base station.

Whether it is the updated positioning assistance data or not, the related base station includes at least one of a serving base station or a neighbor base station; and the related TP includes at least one of a radio frequency head of a base station, a TP only transmitting positioning reference signal, PRSs, or a PRS-based TBS.

The differential positioning assistance data includes at least one of followings:
compared with the positioning assistance data, at least one of added and released cell or cell information, or a set of differential cell information determined by a matching rule manner of the GCI; where, when cell information of the updated positioning assistance data belongs to original positioning assistance list and information is unchanged, the differential cell information only includes a GCI; when the cell information of the updated positioning assistance data belongs to the original positioning assistance list, and the information varies, the differential cell information includes the GCI and changed information; when the cell information of the updated positioning assistance data does not belongs to the original positioning assistance list, the differential cell information includes all cell information.

The positioning assistance data includes at least cell information of a serving cell to which the target UE belongs or a reference cell, and cell information of all or a part of the neighbor cells, where all neighbor cells include: a serving base station of the target UE, a neighbor base station and/or all cells under a neighbor location management network element except the serving cell or the reference cell; the part of the neighbor cells includes: a serving base station of the target UE, a neighbor base station and/or a part of cells under the neighbor location management network element.

The cell information includes at least one of followings: a physical identification of the cell, geographic coordinate information of the cell, cell coverage information, PRS configuration information of the cell, a measurement value of a position measurement unit and a cell synchronization attribute; where the physical identification of the cell includes a PCI of the cell, a GCI and TP IDs.

The first acquisition module, the first transmission module, and the first reception module according to this embodiment may all be presented in a form of an antenna, and the generation module may be presented in a form of a processor as a part of an E-SMLC processor. In specific implementation, after the antenna receives required data, the data may be transmitted to the processor, the processor may specifically processed.

Another position assistance data configuration apparatus is provided according to an embodiment of the present invention, the apparatus may be arranged in UE and it includes a second reception module and an execution module.

The second reception module is configured to receive positioning assistance data of an OTDOA from an evolved serving location mobile center, E-SMLC; and the execution module is coupled with the second reception module and the execution module is configured to perform selection of a reference cell and sorting of a neighbor cell list according to the positioning assistance data.

The execution module is further configured to select one cell from all cells corresponding to the positioning assistance data as the reference cell, or accept a reference cell selected by the E-SMLC, when the selection of the reference cell is performed. The execution module is further configured to determine a position of the UE according to priori information, and select a cell closest to the UE, select the reference cell according to a minimum TOA or a minimum TOA error value.

The execution module is further configured to perform sorting of all or a part of cells in the positioning assistance data except the reference cell according to a predetermined method, when the sorting of the neighbor cell list is performed.

A method of sorting the neighbor cell list includes at least one of followings steps. The neighbor cell list is selected according to signal strength, a distance from the UE, a TOA value, and a TOA error value. The cell includes a cell or a TP; the TP includes at least one of a radio frequency head of a base station, a TP only transmitting a PRS signal and a PRS-based TBS.

The priori information includes at least one of followings: information of a serving cell to which the UE belongs, position information of the UE, signal strength of a cell received by the UE, a TOA value of a PRS detected by the UE, and a TOA error value of the PRS detected by the UE.

The second reception module is further configured to receive differential positioning assistance data from the E-SMLC; and the execution module is further configured to determine new positioning assistance data through the differential positioning assistance data and original positioning assistance data; and perform selection of the reference cell and sorting of the neighbor cell list according to the priori information and the new positioning assistance data.

In actual implementation, when determining the new positioning assistance data through the differential positioning assistance data and the original positioning assistance data, the execution module is further configured to perform matching of a GCI of the differential positioning assistance data with the original positioning assistance data; when the GCI of the cell of the positioning assistance data is unmatched, the execution module is further configured to delete all cell information of the cell; when the GCI of the differential positioning assistance data is matched, and a differential positioning assistance data cell matching with the cell to which original positioning assistance data belongs only has GCI information, the execution module is further configured to keep the cell information of the cell unchanged; when the GCI of the differential positioning assistance data is matched, and the differential positioning assistance data cell matching with the cell to which original positioning assistance data belongs has changed information, the execution module is further configured to update the changed information to the original positioning assistance data; and when the unmatched GCI exists in the differential positioning assistance data, the cell information of the GCI is added to the original positioning assistance data.

In implementation, when determining the new positioning assistance data according to the differential positioning assistance data and the original positioning assistance data, the execution module is further configured to acquire at least one of cell needed to be added or cell information needed to be added; when the UE acquires the at least one of cell needed to be added or cell information needed to be added, the execution module is further configured to add the at least one of cell needed to be added or cell information needed to be added to the positioning assistance data; and when the UE acquires the at least one of the cell needed to be released or cell information needed to be released, delete the at least one of cell needed to be released or cell information needed to be released from the positioning assistance data.

The priori information includes at least one of followings: information of a serving cell to which the UE belongs, position information of the UE, signal strength of a cell received by the UE, a TOA value of a PRS detected by the UE, a TOA error value of the PRS detected by the UE, and a previous position result of the UE. The existing priori information is basically the same as the priori information mentioned above, except that the previous position result of the UE is added.

The second reception module according to this embodiment may be presented in a form of an antenna, and the execution module may be presented in a form of a processor as a part of a UE processor. In specific implementation, after the antenna receives required data, the data may be transmitted to the processor to be specifically processed by the processor.

From the description of the above embodiments, those skilled in the art may clearly understand that the methods according to the above embodiments may be implemented by means of software plus necessary general-purpose hardware platforms, and of course, may also be implemented by means of hardware, but in many cases the former is a better embodiment. Based on this understanding, the technical solutions of the present invention may be implemented in a form of a software product that is stored in a storage medium (e.g., a ROM/RAM, a magnetic disk, an optical disk) and includes a number of instructions to cause a terminal device (e.g., a mobile phone, a computer, a server, a network device, etc.) to execute the methods of various embodiments of the present invention.

An embodiment of the invention further provides a storage medium. In this embodiment, the storage medium may be configured to store instructions for executing the configuration method of the positioning assistance data. In specific implementation, two or three storage media may be set according to different execution subjects, and different storage media store program codes of various steps corresponding to the different execution subjects, which will not be repeated here.

In this embodiment, in some cases, the steps shown or described may be performed in an order different from that of the above-described methods, or they may be separately fabricated into individual integrated circuit modules, or multiple modules or steps among them may be fabricated into a single integrated circuit module. Thus, the present invention is not limited to any specific combination of hardware and software.

Although the preferred embodiments of the present invention have been disclosed for illustrative purposes, those skilled in the art will recognize that various modifications, additions and substitutions are also possible, and therefore, the scope of the present invention should not be limited to the above embodiments.

### INDUSTRIAL APPLICABILITY

In the embodiments of the present invention, the E-SMLC acquires positioning assistance data of an OTDOA from a base station; the E-SMLC transmits the positioning assistance data to target user equipment, UE. In this way, assistance data of an OTDOA positioning mode can be updated and configured, information interaction and network-side intervention are reduced, and the time latency and real-time performance are lower; selection of the reference cell and sorting of the neighbor list are implemented on the UE side, which is more convenient to combine various priori information, thus a better location effect is achieved.

## Claims

1. A positioning assistance data configuration method, the method comprising:
acquiring (S202, S302), by an evolved serving mobile location center, E-SMLC, positioning assistance data of an observed time difference of arrival, OTDOA, from a base station; and
transmitting (S204), by the E-SMLC, the positioning assistance data to target user equipment, UE, **characterized by**:
receiving, by the E-SMLC, updated positioning assistance data transmitted by the base station;
generating, by the E-SMLC, differential positioning assistance data according to the updated positioning assistance data; and
transmitting (S304) by the E-SMLC, the differential positioning assistance data to the target UE;
wherein the updated positioning assistance data is at least one of positioning assistance data needed to be updated of the base station or positioning assistance data needed to be updated of transmission point, TP, which interacts with the base station,
wherein the differential positioning assistance data comprises at least one of: at least one of added and released cell or added and released cell information relative to the positioning assistance data,
or a set of differential cell information determined by a matching rule manner of global cell identification, GCI; wherein
in response to determining, by the E-SMLC, that a cell corresponding to the updated positioning assistance data belongs to one of cells comprised in the positioning assistance data, and cell information of the cell corresponding to the updated positioning assistance data is unchanged, the differential cell information only comprises a GCI of the cell corresponding to the updated positioning assistance data;
in response to determining, by the E-SMLC, that the cell corresponding to the updated positioning assistance data belongs to one of the cells comprised in the positioning assistance data, and the cell information of the cell corresponding to the updated positioning assistance data changes, the differential cell information comprises the changed cell information and the GCI of the cell corresponding to the updated positioning assistance data; and
in response to determining, by the E-SMLC, that the cell information of the cell corresponding to the updated positioning assistance data does not belong to one of the cells comprised in the positioning assistance data, the differential cell information comprises all cell information of the cell corresponding to the updated positioning assistance data.

2. The method according to claim 1, wherein the positioning assistance data is positioning assistance data of the base station and positioning assistance data of the transmission point, TP, which interacts with the base station.

3. A positioning assistance data configuration method, the method comprising:
receiving, by user equipment, UE, positioning assistance data of an observed time difference of arrival, OTDOA, from an evolved serving location mobile center, E-SMLC; and **characterized by**:
performing, by the UE, selection of a reference cell and sorting of a neighbor cell list according to the positioning assistance data,
receiving, by the UE, differential positioning assistance data from the E-SMLC;
updating, by the UE, the positioning assistance data according to the differential positioning assistance data; and
performing, by the UE, the selection of the reference cell and the sorting of the neighbor cell list according to the updated positioning assistance data,
wherein updating, by the UE, the positioning assistance data according to the differential positioning assistance data comprises:
matching, by the UE, a global cell identification code, GCI, of a cell corresponding to the differential positioning assistance data with a GCI of a cell comprised in the positioning assistance data;
in response to determining, by the UE, that the GCI of the cell of the positioning assistance data is unmatched,
deleting all cell information of the cell corresponding to the unmatched GCI from the positioning assistance data;
in response to determining, by the UE, that the GCI of the cell corresponding to the differential positioning
assistance data matches with the GCI of the cell comprised in the positioning assistance data, and the cell corresponding to the differential positioning assistance data only has GCI information, keeping the cell information of the cell corresponding to the positioning assistance data unchanged;
in response to determining, by the UE, that the GCI of the cell corresponding to the differential positioning
assistance data matches with the GCI of the cell comprised in the positioning assistance data and the cell information of the cell corresponding to the differential positioning assistance data changes, updating the changed cell information to the positioning assistance data; and
in response to determining, by the UE, that the GCI exists in the cell corresponding to the differential positioning assistance data and the GCI is unmatched, adding the cell information of the cell corresponding to the GCI to the positioning assistance data.

4. The method according to claim 3, wherein performing, by the UE, the selection of the reference cell and the sorting of the neighbor cell list according to the positioning assistance data comprises: performing (S206, S308 ), by the UE, the selection of the reference cell and the sorting of the neighbor cell list according to priori information and the positioning assistance data. the priori information including cell information of the serving cell to which the UE belongs, wherein performing, by the UE, the selection of the reference cell according to the positioning assistance data comprises:
selecting, by the UE, one cell from all cells corresponding to the positioning assistance data as the reference cell, or
accepting, by the UE, a reference cell selected by the E-SMLC as the reference cell.

5. The method according to claim 4, wherein selecting, by the UE, one cell from the all cells corresponding to the positioning assistance data as the reference cell comprises:
determining a position of the UE according to the priori information and selecting a cell closest to the UE as the reference cell, or selecting the reference cell according to a minimum time of arrival, TOA, value, or selecting the reference cell according to a minimum TOA error value.

6. The method according to claim 3 or 4, wherein performing, by the UE, the sorting of the neighbor cell list according to the positioning assistance data comprises:
sorting, according to a predetermined method, all or a part of the cells in the positioning assistance data except the reference cell in the positioning assistance data,
wherein a method of sorting the neighbor cell list comprises at least one of:
sorting the neighbor cell list according to signal strength;
sorting the neighbor cell list according to a distance from the UE; or
sorting the neighbor cell list according to a TOA value or a TOA error value.

7. The method according to claim 3, wherein updating, by the UE, the positioning assistance data according to the differential positioning assistance data comprises:
acquiring, by the UE, at least one of added cell or added cell information, or at least one of released cell or released cell information;
in response to determining that the UE acquires at least one of added cell or added cell information, adding the at least one of added cell or added cell information to the positioning assistance data; and
in response to determining that the UE acquires at least one of released cell or released cell information, deleting the at least one of released cell or released cell information from the positioning assistance data.

8. A computer storage medium, storing a computer program that, when the computer program is executed by a processor of an evolved serving mobile location center, E-SMLC, performs the positioning assistance data configuration method according to any one of claims 1 to 2.

9. A computer storage medium, storing a computer program that, when the computer program is executed by a processor of a user equipment, performs the positioning assistance data configuration method according to any one of claims 3 to 7.

10. A positioning assistance data configuration evolved serving mobile location center, E-SMLC, comprising:
a memory, which is configured to store a program for positioning assistance data configuration; and
a processor, which is configured to the positioning assistance data configuration method according to any one of claims 1 to 2 when the program is executed by the processor.

11. A positioning assistance data configuration user equipment, UE, comprising:
a memory, which is configured to store a program for positioning assistance data configuration; and
a processor, which is configured to perform the positioning assistance data configuration method according to any one of claims 3 to 7 when the program is executed by the processor.

## Patentansprüche

1. Positionierungsassistenzdatenkonfigurationsverfahren, wobei das Verfahren Folgendes umfasst:
Erfassen (S202, S302), durch ein Evolved Serving Mobile Location Center, E-SMLC, von Positionierungsassistenzdaten einer Observed Time Difference of Arrival, OTDOA, von einer Basisstation; und
Übertragen (S204), durch das E-SMLC, der Positionierungsassistenzdaten an ein Ziel-Endgerät, UE (user equipment), **gekennzeichnet durch**:
Empfangen, durch das E-SMLC, aktualisierter Positionierungsassistenzdaten, die von der Basisstation übertragen werden;
Erzeugen, durch das E-SMLC, von Differenz-Positionierungsassistenzdaten gemäß den aktualisierten Positionierungsassistenzdaten; und
Übertragen (S304), durch das E-SMLC, der Differenz-Positionierungsassistenzdaten an das Ziel-UE;
wobei die aktualisierten Positionierungsassistenzdaten mindestens eines aus Positionierungsassistenzdaten, die aktualisiert werden mussten, der Basisstation oder
Positionierungsassistenzdaten, die aktualisiert werden mussten, des Übertragungspunkts, TP (transmission point), der mit der Basisstation interagiert, sind, wobei die Differenz-Positionierungsassistenzdaten mindestens eines der Folgenden umfassen: mindestens eines aus einer hinzugefügten und freigegebenen Zelle oder hinzugefügten und freigegebenen Zelleninformation in Bezug auf die Positionierungsassistenzdaten, oder ein Satz von Differenz-Zellinformationen, der von einem Abgleichsregelverfahren der Global Cell Identification, GCI, ermittelt wird; wobei als Reaktion auf das Ermitteln, durch das E-SMLC, dass eine Zelle, die den aktualisierten Positionierungsassistenzdaten entspricht, zu einer von Zellen gehört, die in den Positionierungsassistenzdaten umfasst sind, und eine Zellinformation der Zelle, die den aktualisierten Positionierungsassistenzdaten entspricht, unverändert ist, die Differenz-Zellinformation nur eine GCI der Zelle, die den aktualisierten Positionierungsassistenzdaten entspricht, umfasst;
als Reaktion auf das Ermitteln, durch das E-SMLC, dass die Zelle, die den aktualisierten Positionierungsassistenzdaten entspricht, zu einer von Zellen gehört, die in den Positionierungsassistenzdaten umfasst sind, und die Zellinformation der Zelle, die den aktualisierten Positionierungsassistenzdaten entspricht, sich ändert, die Differenz-Zellinformation die geänderte Zellinformation und die GCI der Zelle, die den aktualisierten Positionierungsassistenzdaten entspricht, umfasst; und
als Reaktion auf das Ermitteln, durch das E-SMLC, dass die Zellinformation der Zelle, die den aktualisierten Positionierungsassistenzdaten entspricht, nicht zu einer der Zellen gehört, die in den Positionierungsassistenzdaten umfasst sind, die Differenz-Zellinformation alle Zellinformationen der Zelle, die den aktualisierten Positionierungsassistenzdaten entspricht, umfasst.

2. Verfahren nach Anspruch 1, wobei die Positionierungsassistenzdaten die Positionierungsassistenzdaten der Basisstation und Positionierungsassistenzdaten des Übertragungspunkts, TP, der mit der Basisstation interagiert, sind.

3. Positionierungsassistenzdatenkonfigurationsverfahren, wobei das Verfahren Folgendes umfasst:
Empfangen, durch ein Endgerät, UE, von Positionierungsassistenzdaten einer Observed Time Difference of Arrival, OTDOA, von einem Evolved Serving Mobile Location Center, E-SMLC; und **gekennzeichnet durch**:
Durchführen, durch das UE, einer Auswahl einer Referenzzelle und Sortieren einer Nachbarzellenliste gemäß den Positionierungsassistenzdaten, Empfangen, durch das UE, von Differenz-Positionierungsassistenzdaten von dem E-SMLC;
Aktualisieren, durch das UE, der Positionierungsassistenzdaten gemäß den Differenz-Positionierungsassistenzdaten; und
Durchführen, durch das UE, der Auswahl der Referenzzelle und Sortieren der Nachbarzellenliste gemäß den aktualisierten Positionierungsassistenzdaten,
wobei das Aktualisieren, durch das UE, der Positionierungsassistenzdaten gemäß den Differenz-Positionierungsassistenzdaten Folgendes umfasst:
Abgleichen, durch das UE, eines Global-Cell-Identification(GCI)-Codes einer Zelle, die den Differenz-Positionierungsassistenzdaten entspricht, mit einer GCI einer Zelle, die in den Positionierungsassistenzdaten umfasst ist,
als Reaktion auf das Ermitteln, durch das UE, dass die GCI der Zelle der Positionierungsassistenzdaten keine Übereinstimmung hat, Löschen aller Zellinformationen der Zelle, die der GCI ohne Übereinstimmung entspricht, aus den Positionierungsassistenzdaten;
als Reaktion auf das Ermitteln, durch das UE, dass die GCI der Zelle, die den Differenz-Positionierungsassistenzdaten entspricht, mit der GCI der Zelle, die in den Positionierungsassistenzdaten umfasst ist, übereinstimmt, und
die Zelle, die den Differenz- Positionierungsassistenzdaten entspricht, nur eine GCI-Information aufweist, unverändertes Beibehalten der Zellinformation der Zelle, die den Positionierungsassistenzdaten entspricht;
als Reaktion auf das Ermitteln, durch das UE, dass die GCI der Zelle, die den Differenz-Positionierungsassistenzdaten entspricht, mit der GCI der Zelle, die in den Positionierungsassistenzdaten umfasst ist, übereinstimmt und die Zellinformation der Zelle, die den Differenz-Positionierungsassistenzdaten entspricht, sich verändert,
Aktualisieren der veränderten Zellinformation auf die Positionierungsassistenzdaten; und
als Reaktion auf das Ermitteln, durch das, dass die GCI in der Zelle existiert, die den Differenz-Positionierungsassistenzdaten entspricht, und die GCI keine Übereinstimmung hat, Hinzufügen der Zellinformation der Zelle, die der GCI entspricht, zu den Positionierungsassistenzdaten.

4. Verfahren nach Anspruch 3, wobei das Durchführen, durch das UE, der Auswahl der Referenzzelle und das Sortieren der Nachbarzellenliste gemäß den Positionierungsassistenzdaten Folgendes umfasst:
Durchführen (S206, S308), durch das UE, der Auswahl der Referenzelle und des Sortierens der Nachbarzellenliste gemäß einer A-priori-Information und den Positionierungsassistenzdaten.
wobei die A-priori-Information eine Zellinformation der betreuenden Zelle, zu der das UE gehört, beinhaltet,
wobei das Durchführen, durch das UE, der Auswahl der Referenzzelle gemäß den Positionierungsassistenzdaten Folgendes umfasst:
Auswählen, durch das UE, einer Zelle aus allen Zellen, die den Positionierungsassistenzdaten entsprechen, als die Referenzzelle, oder
Annehmen, durch das UE, einer Referenzzelle, die von dem E-SMLC als die Referenzzelle ausgewählt wird.

5. Verfahren nach Anspruch 4, wobei das Auswählen, durch das UE, einer Zelle aus allen Zellen, die den Positionierungsassistenzdaten entsprechen, als die Referenzzelle Folgendes umfasst:
Ermitteln einer Position des UE gemäß der A-priori-Information und Auswählen einer Zelle, die dem UE am nächsten ist, als die Referenzzelle, oder Auswählen der Referenzzelle gemäß einem minimalen Time-of-arrival(TOA)-Wert oder Auswählen der Referenzzelle gemäß einem minimalen TOA-Fehlerwert.

6. Verfahren nach Anspruch 3 oder 4, wobei das Durchführen, durch das UE, des Sortierens der Nachbarzellenliste gemäß den Positionierungsassistenzdaten Folgendes umfasst:
Sortieren, gemäß einem vorbestimmten Verfahren, aller oder eines Teils der Zellen in den Positionierungsassistenzdaten außer der Referenzzelle in den Positionierungsassistenzdaten, wobei ein Verfahren des Sortierens der Nachbarzellenliste mindestens eines der Folgenden umfasst:
Sortieren der Nachbarzellenliste gemäß der Signalstärke;
Sortieren der Nachbarzellenliste gemäß einem Abstand von dem UE; oder
Sortieren der Nachbarzellenliste gemäß einem TOA-Wert oder einem TOA-Fehlerwert.

7. Verfahren nach Anspruch 3, wobei das Aktualisieren, durch das UE, der Positionierungsassistenzdaten gemäß den Differenz-Positionierungsassistenzdaten Folgendes umfasst:
Erfassen, durch das UE, mindestens eines aus einer hinzugefügten Zelle oder hinzugefügten Zellinformation oder mindestens eines aus einer freigegebenen Zelle oder freigegebenen Zellinformation;
als Reaktion auf das Ermitteln, dass das UE mindestens eines aus einer hinzugefügten Zelle oder hinzugefügten Zellinformation erfasst, Hinzufügen der mindestens einen aus der hinzugefügten Zelle oder hinzugefügten Zellinformation zu den Positionierungsassistenzdaten; und
als Reaktion auf das Ermitteln, dass das UE mindestens eines aus einer freigegebenen Zelle oder freigegebenen Zellinformation erfasst, Löschen der mindestens einen aus der freigegebenen Zelle oder freigegebenen Zellinformation aus den Positionierungsassistenzdaten.

8. Computerspeichermedium, das ein Computerprogramm speichert, das, wenn das Computerprogramm von einem Prozessor eines Evolved Serving Mobile Location Center, E-SMLC, ausgeführt wird, das Positionierungsassistenzdatenkonfigurationsverfahren nach einem der Ansprüche 1 bis 2 durchführt.

9. Computerspeichermedium, das ein Computerprogramm speichert, das, wenn das Computerprogramm von einem Prozessor eines Endgeräts ausgeführt wird, das Positionierungsassistenzdatenkonfigurationsverfahren nach einem der Ansprüche 3 bis 7 durchführt.

10. Evolved Serving Mobile Location Center, E-SMLC, zur Positionierungsassistenzdatenkonfiguration, umfassend:
einen Speicher, der so konfiguriert ist, dass er ein Programm zur Positionierungsassistenzdatenkonfiguration speichert; und
einen Prozessor, der so konfiguriert ist, dass er das Positionierungsassistenzdatenkonfigurationsverfahren nach einem der Ansprüche 1 bis 2 durchführt, wenn das Programm von dem Prozessor ausgeführt wird.

11. Endgerät, UE, zur Positionierungsassistenzdatenkonfiguration, umfassend:
einen Speicher, der so konfiguriert ist, dass er ein Programm zur Positionierungsassistenzdatenkonfiguration speichert; und
einen Prozessor, der so konfiguriert ist, dass er das Positionierungsassistenzdatenkonfigurationsverfahren nach einem der Ansprüche 3 bis 7 durchführt, wenn das Programm von dem Prozessor ausgeführt wird.

## Revendications

1. Procédé de configuration de données d'aide au positionnement, le procédé comprenant :
l'acquisition (S202, S302), par un centre de localisation des mobiles de desserte évolué, E-SMLC, de données d'aide au positionnement d'une différence de temps d'arrivée observée, OTDOA, à partir d'une station de base ; et
l'émission (S204), par l'E-SMLC, des données d'aide au positionnement vers un équipement utilisateur, UE, cible,
**caractérisé par** :
la réception, par l'E-SMLC, de données d'aide au positionnement mises à jour émises par la station de base ;
la génération, par l'E-SMLC, de données d'aide au positionnement différentielles selon les données d'aide au positionnement mises à jour ; et
l'émission (S304), par l'E-SMLC, des données d'aide au positionnement différentielles vers l'UE cible ;
dans lequel les données d'aide au positionnement mises à jour sont au moins des données parmi des données d'aide au positionnement nécessitant d'être mises à jour de la station de base ou des données d'aide au positionnement nécessitant d'être mises à jour d'un point d'émission, TP, qui interagit avec la station de base, dans lequel les données d'aide au positionnement différentielles comprennent au moins l'une parmi :
au moins l'une parmi une cellule ajoutée et libérée ou des informations de cellule ajoutée et libérée se rapportant aux données d'aide au positionnement, ou un ensemble d'informations de cellule différentielles déterminées par une manière de règle de mise en concordance d'identification de cellule globale, GCI ; dans lequel
en réponse à la détermination, par l'E-SMLC, qu'une cellule correspondant aux données d'aide au positionnement mises à jour appartient à l'une parmi des cellules comprises dans les données d'aide au positionnement, et des informations de cellule de la cellule correspondant aux données d'aide au positionnement mises à jour sont inchangées, les informations de cellule différentielles comprennent uniquement une GCI de la cellule correspondant aux données d'aide au positionnement mises à jour ;
en réponse à la détermination, par l'E-SMLC, que la cellule correspondant aux données d'aide au positionnement mises à jour appartient à l'une parmi les cellules comprises dans les données d'aide au positionnement, et les informations de cellule de la cellule correspondant aux données d'aide au positionnement mises à jour changent, les informations de cellule différentielles comprennent les informations de cellule changées et la GCI de la cellule correspondant aux données d'aide au positionnement mises à jour ; et
en réponse à la détermination, par l'E-SMLC, que les informations de cellule de la cellule correspondant aux données d'aide au positionnement mises à jour n'appartiennent pas à l'une parmi les cellules comprises dans les données d'aide au positionnement, les informations de cellule différentielles comprennent toutes les informations de cellule de la cellule correspondant aux données d'aide au positionnement mises à jour.

2. Procédé selon la revendication 1, dans lequel les données d'aide au positionnement sont des données d'aide au positionnement de la station de base ou des données d'aide au positionnement du point d'émission, TP, qui interagit avec la station de base.

3. Procédé de configuration de données d'aide au positionnement, le procédé comprenant :
la réception, par un équipement utilisateur, UE, de données d'aide au positionnement d'une différence de temps d'arrivée observée, OTDOA, à partir d'un centre de localisation des mobiles de desserte évolué, E-SMLC ; et **caractérisé par** :
la réalisation, par l'UE, d'une sélection d'une cellule de référence et d'un tri d'une liste de cellules voisines selon les données d'aide au positionnement,
la réception, par l'UE, de données d'aide au positionnement différentielles provenant de l'E-SMLC ;
la mise à jour, par l'UE, des données d'aide au positionnement selon les données d'aide au positionnement différentielles ; et
la réalisation, par l'UE, de la sélection de la cellule de référence et du tri de la liste de cellules voisines selon les données d'aide au positionnement mises à jour,
dans lequel la mise à jour, par l'UE, des données d'aide au positionnement selon les données d'aide au positionnement différentielles comprend :
la mise en concordance, par l'UE, d'un code d'identification de cellule globale, GCI, d'une cellule correspondant aux données d'aide au positionnement différentielles avec une GCI d'une cellule comprise dans les données d'aide au positionnement ;
en réponse à la détermination, par l'UE, que la GCI de la cellule des données d'aide au positionnement n'est pas mise en concordance, la suppression de toutes les informations de cellule de la cellule correspondant à la GCI non mise en concordance à partir des données d'aide au positionnement ;
en réponse à la détermination, par l'UE, que la GCI de la cellule correspondant aux données d'aide au positionnement différentielles concorde avec la GCI de la cellule comprise dans les données d'aide au positionnement, et la cellule correspondant aux données d'aide au positionnement différentielles possède uniquement des informations de GCI, le maintien des informations de cellule de la cellule correspondant aux données d'aide au positionnement inchangées ;
en réponse à la détermination, par l'UE, que la GCI de la cellule correspondant aux données d'aide au positionnement différentielles concorde avec la GCI de la cellule comprise dans les données d'aide au positionnement et les informations de cellule de la cellule correspondant aux données d'aide au positionnement différentielles changent, la mise à jour des informations de cellule changées vers les données d'aide au positionnement ; et
en réponse à la détermination, par l'UE, que la GCI existe dans la cellule correspondant aux données d'aide au positionnement différentielles et que la GCI n'est pas mise en concordance,
l'ajout des informations de cellule de la cellule correspondant à la GCI aux données d'aide au positionnement.

4. Procédé selon la revendication 3, dans lequel la réalisation, par l'UE, de la sélection de la cellule de référence et du tri de la liste de cellules voisines selon les données d'aide au positionnement comprend :
la réalisation (S206, S308), par l'UE, de la sélection de la cellule de référence et du tri de la liste de cellules voisines selon des informations préliminaires et les données d'aide au positionnement.
les informations préliminaires comportant des informations de cellule de la cellule de desserte à laquelle l'UE appartient,
dans lequel la réalisation, par l'UE, de la sélection de la cellule de référence selon les données d'aide au positionnement comprend:
la sélection, par l'UE, d'une cellule parmi toutes les cellules correspondant aux données d'aide au positionnement comme étant la cellule de référence, ou
l'acceptation, par l'UE, d'une cellule de référence sélectionnée par l'E-SMLC comme étant la cellule de référence.

5. Procédé selon la revendication 4, dans lequel la sélection, par l'UE, d'une cellule parmi toutes les cellules correspondant aux données d'aide au positionnement comme étant la cellule de référence comprend :
la détermination d'une position de l'UE selon les informations préliminaires et la sélection d'une cellule la plus proche de l'UE comme étant la cellule de référence, ou la sélection de la cellule de référence selon une valeur de temps d'arrivée, TOA, minimale, ou la sélection de la cellule de référence selon une valeur d'erreur de TOA minimale.

6. Procédé selon la revendication 3 ou 4, dans lequel la réalisation, par l'UE, du tri de la liste des cellules voisines selon les données d'aide au positionnement comprend :
le tri, selon un procédé prédéterminé, de toutes ou d'une partie des cellules dans les données d'aide au positionnement à l'exception de la cellule de référence dans les données d'aide au positionnement, dans lequel un procédé de tri de la liste des cellules voisines comprend au moins l'un parmi :
le tri de la liste des cellules voisines selon une intensité de signal;
le tri de la liste des cellules voisines selon une distance à l'UE ; ou
le tri de la liste des cellules voisines selon une valeur de TOA ou une valeur d'erreur de TOA.

7. Procédé selon la revendication 3, dans lequel la mise à jour, par l'UE, des données d'aide au positionnement selon les données d'aide au positionnement différentielles comprend :
l'acquisition, par l'UE, d'au moins l'une parmi une cellule ajoutée ou des informations de cellule ajoutée, ou d'au moins l'une parmi une cellule libérée ou des informations de cellule libérée ;
en réponse à la détermination que l'UE acquiert au moins l'une parmi une cellule ajoutée ou des informations de cellule ajoutée, l'ajout de l'au moins l'une parmi une cellule ajoutée ou des informations de cellule ajoutée aux données d'aide au positionnement ; et
en réponse à la détermination que l'UE acquiert au moins l'une parmi une cellule libérée ou des informations de cellule libérée, la suppression de l'au moins l'une parmi une cellule libérée ou des informations de cellule libérée à partir des données d'aide au positionnement.

8. Support de stockage d'ordinateur, stockant un programme d'ordinateur qui, lorsque le programme d'ordinateur est exécuté par un processeur d'un centre de localisation des mobiles de desserte évolué, E-SMLC, réalise le procédé de configuration de données d'aide au positionnement selon l'une quelconque des revendications 1 à 2.

9. Support de stockage d'ordinateur, stockant un programme d'ordinateur qui, lorsque le programme d'ordinateur est exécuté par un processeur d'un équipement utilisateur, réalise le procédé de configuration de données d'aide au positionnement selon l'une quelconque des revendications 3 à 7.

10. Centre de localisation des mobiles de desserte évolué, E-SMLC, de configuration de données d'aide au positionnement comprenant :
une mémoire, qui est configurée pour stocker un programme pour une configuration de données d'aide au positionnement ; et
un processeur, qui est configuré pour réaliser le procédé de configuration de données d'aide au positionnement selon l'une quelconque des revendications 1 à 2 lorsque le programme est exécuté par le processeur.

11. Équipement utilisateur, UE, de configuration de données d'aide au positionnement comprenant :
une mémoire, qui est configurée pour stocker un programme pour une configuration de données d'aide au positionnement ; et
un processeur, qui est configuré pour réaliser le procédé de configuration de données d'aide au positionnement selon l'une quelconque des revendications 3 à 7 lorsque le programme est exécuté par le processeur.
